# EUROPÄISCHE PATENTSCHRIFT

(11) **EP 2 378 652 B1**
(45) Veröffentlichungstag und Bekanntmachung des Hinweises auf die Patenterteilung: **11.09.2019**
(21) Anmeldenummer: 11151486.5
(22) Anmeldetag: 20.01.2011
(51) Int. Cl.: H02M 3/335

(54) **Schaltungsanordnung und Verfahren zur potentialgetrennten Energieübertragung mit zwei Ausgangsgleichspannungen**
Circuit configuration and method for potential-separated energy transmission with two output direct currents
Agencement de commutation et procédé de transmission d'énergie isolé par potentiel doté de deux tensions continues de sortie

(30) Priorität: 14.04.2010 DE 102010014941
(43) Veröffentlichungstag der Anmeldung: 19.10.2011
(73) Patentinhaber: SEMIKRON Elektronik GmbH & Co. KG, 90431 Nürnberg (DE)
(72) Erfinder: Mühlhöfer, Alexander, 90522 Oberasbach (DE); Königsmann, Gunter, 91058 Erlangen (DE)

(56) Entgegenhaltungen:
- EP-A2- 0 184 963
- WO-A1-2008/105741
- WO-A2-2009/105734
- DE-A1- 2 447 968
- US-A1- 2005 243 580
- US-B1- 6 288 913
- MICHAEL J RYAN ET AL: "A New ZVS LCL-Resonant Push-Pull DC-DC Converter Topology", IEEE TRANSACTIONS ON INDUSTRY APPLICATIONS, IEEE SERVICE CENTER, PISCATAWAY, NJ, US, vol. 34, no. 5, 1 October 1998 (1998-10-01), XP011022460, ISSN: 0093-9994

## Beschreibung

Die Erfindung beschreibt eine Schaltungsanordnung und ein zugehöriges Verfahren zur potentialgetrennten Energieübertragung von einer Primär- zu einer Sekundärseite, wobei dort zwei Ausgangsgleichspannungen mit jeweils unterschiedlichem Absolutwert der Spannung anstehen sollen. Diese beiden Ausgangsgleichspannungen weisen eine unterschiedliche Polarität auf.

Derartige Schaltungsanordnungen sind beispielhaft Teil von Ansteuerschaltungen für Leistungshalbleitermodule. Eine hinlänglich bekannte Basisschaltung eines Leistungshalbleitermoduls ist die Halbbrückenschaltung von zwei Leistungstransistoren, bei dem sich zumindest einer der beiden Leistungstransistoren nicht auf konstantem Grundpotential befindet. Dessen Grundpotential kann in der Größenordnung von einem Kilovolt schwanken. Daher ist es allgemein bekannter Stand der Technik die zugehörigen Ansteuerschaltungen mit einer Primärseite und mindestens einer hiervon galvanisch getrennten Sekundärseite auszubilden. Die Primärseite hat hierbei zumindest die Aufgabe der Weiterleitung der Steuerimpulse zur jeweiligen Sekundärseite, sowie auch der Leistungsübertragung, zur Energieversorgung der Sekundärseite.

Für diese Leistungsübertragung sind Transformatoren das vielfach eingesetzte und hinlänglich bekannte Mittel. Diese werden in ihrer einfachsten Ausgestaltung mit einer primär- und einer sekundärseitigen Wicklung ausgebildet und von einer Wechselspannungsquelle gespeist. Auf der Sekundärseite wird dann diese Wechselspannung zur Erzeugung einer Gleichspannung, wie sie beispielhaft zur Gateansteuerung eines Leistungstransistors notwendig ist, gleichgerichtet und gegebenenfalls gefiltert.

Bei einer Vielzahl von Leistungstransistoren ist es bekanntermaßen bevorzugt diese mit einer positiven Spannung einzuschalten und mit einer negativen Spannung auszuschalten. Hierbei kann es aus energetischen Gründen vorteilhaft sein, den Absolutwert der Ausschaltspannung kleiner zu wählen als den durch die Bauart des Leistungstransistors festgelegten Wert der Einschaltspannung.

Aus der WO 2009/105734 A2 ist ein Verfahren und eine Einrichtung zur Stromumrichtung bekannt, deren Eingangsspannung sich in einem weiten Bereich bewegen kann.

Aus der US 2005/0243580 A1 ist eine Einrichtung und ein Verfahren zur Umrichtung von Strömen zur Helligkeitssteuerung von Displays bekannt.

Aus der EP 0184963 A2 ist ein Synchronleistungsgleichrichter mit einem bipolaren Leistungstransistor, der von einer Steuereinrichtung gesteuert wird, bekannt.

Aus der US 3 938 025 ist ein DC/DC Wandler zur Erzeugung zweier stabiler DC Spannungen bekannt.

Aus MICHAEL J RYAN ET AL: "A New ZVS LCL-Resonant Push-Pull DC-DC Converter Topology",IEEE TRANSACTIONS ON INDUSTRY APPLICATIONS, IEEE SERVICE CENTER, PISCATAWAY, NJ, US, Bd. 34, Nr. 5, 1. Oktober 1998 (1998-10-01) ist ein Push-Pull DC/DC Wandler bekannt.

Der Erfindung liegt die Aufgabe zugrunde eine Schaltungsanordnung zur potentialgetrennten Leistungsübertragung zwischen einer Primär- und einer Sekundärseite und ein zugehöriges Verfahren zur Ansteuerung dieser Schaltungsanordnung vorzustellen, wobei sekundärseitig zwei Ausgangsgleichspannung unterschiedlichen Absolutwerts zur Verfügung stehen sollen und gleichzeitig die Anzahl der sekundärseitig notwendigen Bauelemente hierfür gering ist.

Die Aufgabe wird erfindungsgemäß gelöst, durch eine Schaltungsanordnung mit den Merkmalen des Anspruchs 1. Bevorzugte Ausführungsformen sind in den jeweiligen abhängigen Ansprüchen beschrieben.

Die erfindungsgemäße Schaltungsanordnung zur potentialgetrennten Leistungsübertragung von einer Primär- zu einer Sekundärseite, bei der zwei sekundärseitigen Ausgangsgleichspannungen mit unterschiedlichem Absolutwert vorgesehen sind, wobei die erste Ausgangsspannung den höheren Absolutwert aufweist, weist einen Transformator für diese Leistungsübertragung auf. Dieser Transformator weist seinerseits primärseitig eine erste und eine zweite Wicklung mit gemeinsamer Mittelanzapfung und sekundärseitig eine dritte Wicklung auf. Das Verhältnis der Windungsanzahl der ersten und zweiten Wicklung ist hierbei dem Verhältnis der beiden sekundärseitigen Ausgangsgleichspannungen angepasst. Die Anpassung ergibt sich gemäß eines Dreisatzes aus der Identität des Verhältnisses der Transformatorspannungen zum Verhältnis der Windungsanzahlen der zugeordneten Wicklungen.

Die Mittelanzapfung dieses Transformators ist mit einer Gleichspannungsquelle verbunden, weiterhin sind die erste Wicklung mit einem Lastanschluss eines ersten Transistors und die zweite Wicklung mit einem Lastanschluss eines zweiten Transistors und diese beiden Transistoren ihrerseits jeweils mit ihrem zweiten Lastanschluss mit primärseitigem Grundpotential verbunden.

Zur Erzeugung von zwei sekundärseitigen Ausgangsgleichspannungen gleicher Polarität sind die beiden Anschlüsse der sekundärseitigen Wicklung des Transformators jeweils mit der Anode einer ersten und einer zweiten Diode verbunden, an deren jeweiliger Kathode die jeweilige Ausgangsgleichspannung anliegt.

Zur erfindungsgemäßen Erzeugung von zwei sekundärseitigen Ausgangsgleichspannungen unterschiedlicher Polarität liegt ein Anschluss der sekundärseitigen Wicklung auf dortigem Grundpotential während der andere Anschluss mit der Anode einer ersten Diode und der Kathode einer zweiten Diode verbunden ist, an deren jeweils anderem Anschluss die jeweilige Ausgangsgleichspannung anliegt.

In beiden Ausgestaltungen ist es zur Glättung der Ausgangsspannung jeweils bevorzugt, wenn die Ausgänge der ersten und zweiten Diode jeweils mit einem Kondensator verbunden sind, dessen jeweils zweiter Anschluss auf sekundärseitigem Grundpotential liegt.

Es ist bevorzugt zur Erzeugung der ersten sekundärseitigen Ausgangsgleichspannung, derjenigen mit höherem Absolutwert, eine primärseitige Eingangsspannung des gleichen Absolutwertes vorzusehen. Somit ergibt sich für die Windungsanzahl der ersten Wicklung des Transformators die gleiche Windungsanzahl wie bei der sekundärseitigen dritten Wicklung. Die primärseitige zweite Wicklung weist entsprechend eine größere, an das Verhältnis der sekundärseitigen Ausgangsspannungen angepasste, Windungsanzahl auf als die erste Wicklung.

Alternativ kann es bevorzugt sein, dass die Windungsanzahl der ersten Wicklung ein ganzzahliges Vielfaches oder einem ganzzahligen Teil der Windungsanzahl der dritten Wicklung aufweist. Das Verhältnis der Windungsanzahl von erster zu zweiter Wicklung bleibt hiervon natürlich unbeeinflusst.

Bei der erfindungsgemäßen Schaltungsanordnung, werden die Transistoren zur Leistungsübertragung versetzt zueinander mit einem Tastverhältnis geschaltet, das umgekehrt proportional zur Windungsanzahl der zugeordneten Wicklung des Transformators ist. Zur effizienten Ausbildung der Schaltungsanordnung ist es bevorzugt, wenn die Mindestfrequenz einer Schaltperiode beider Transistoren größer als 10 kHz, in bevorzugten Anwendungsfällen in der Größenordnung von 1 MHz, ist.

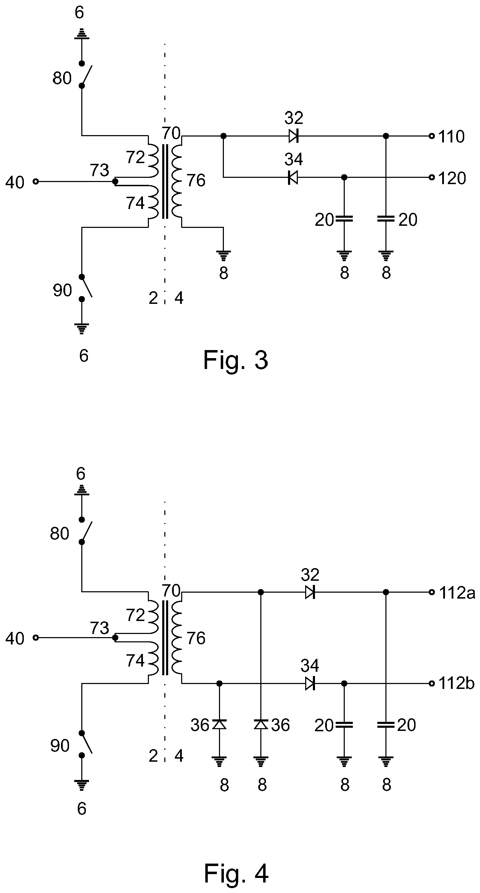

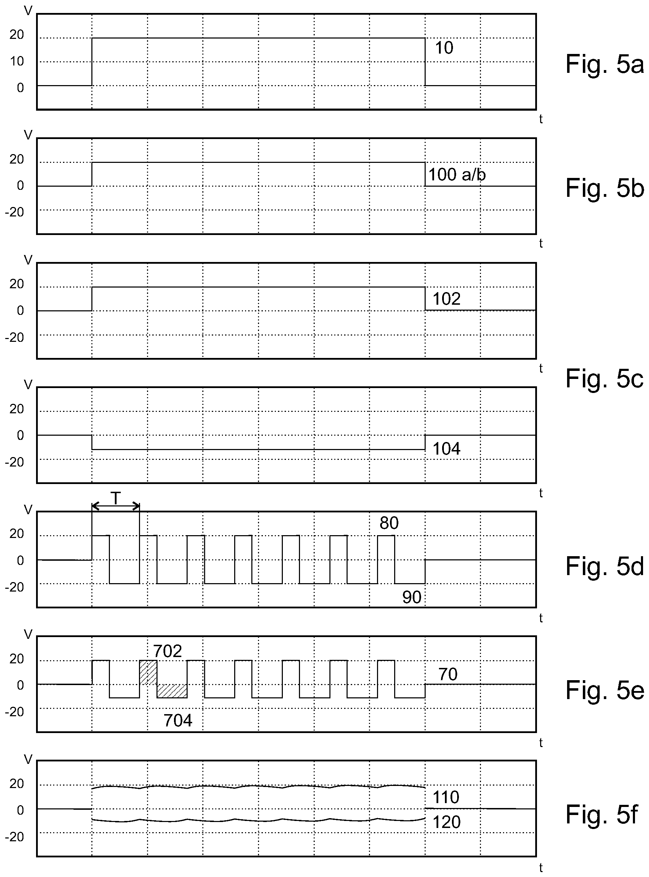

Die erfinderische Lösung wird an Hand des Ausführungsbeispiels der Fig. 3 und FIG 5 weiter erläutert.
Fig. 1 zeigt eine erste Schaltungsanordnung zur Erzeugung zweier sekundärseitiger Ausgangsgleichspannungen unterschiedlicher Polarität und gleichen Absolutwerts gemäß dem Stand der Technik.
Fig. 2 zeigt eine zweite Schaltungsanordnung zur Erzeugung zweier sekundärseitiger Ausgangsgleichspannungen unterschiedlicher Polarität und unterschiedlichen Absolutwerts gemäß dem Stand der Technik.
Fig. 3 zeigt eine erfindungsgemäße Schaltungsanordnung zur Erzeugung zweier sekundärseitiger Ausgangsgleichspannungen unterschiedlicher Polarität und unterschiedlichen Absolutwerts.
Fig. 4 zeigt eine Schaltungsanordnung zur Erzeugung zweier sekundärseitiger Ausgangsgleichspannungen gleicher Polarität und unterschiedlichen Absolutwerts.
Fig. 5 zeigt verschiedene Spannungsverläufe obiger Schaltungsanordnungen.

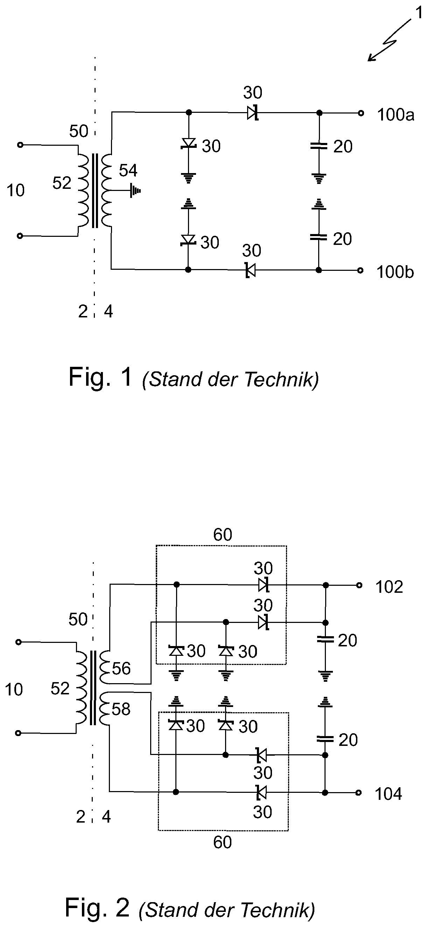

Fig. 1 zeigt eine erste Schaltungsanordnung zur Erzeugung zweier sekundärseitiger Ausgangsgleichspannungen unterschiedlicher Polarität und gleichen Absolutwerts gemäß dem Stand der Technik. Zur Leistungsübertragung von der Primär-(2) zur Sekundärseite (4) ist hier ein Transformator (50) vorgesehen, der eine primärseitige und eine sekundärseitige Wicklung mit gleicher Windungsanzahl aufweist.

Primärseitig wird die Wicklung (52) des Transformators (50) hierbei von einer Wechselspannungsquelle (10) beispielhaft in Ausprägung eines Rechtecksignals, gespeist, die solange aktiv ist, wie Leistung zur Sekundärseite (4) übertragen werden soll, vgl. Fig. 5a, in der der Absolutwert dieser Spannung dargestellt ist. Auf der Sekundärseite wird die jeweilige Ausgangswechselspannung an den beiden Anschlüssen der Wicklung (54) grundsätzlich mit gleichen Mitteln, hier Zenerdioden (30), gleichgerichtet, wodurch dann zwei sekundärseitige Ausgangsgleichspannungen (100 a/b) gleichen Absolutwerts aber unterschiedlicher Polarität zur Verfügung stehen.

Fig. 2 zeigt eine zweite Schaltungsanordnung zur Erzeugung zweier sekundärseitiger Ausgangsgleichspannungen unterschiedlicher Polarität und unterschiedlichen Absolutwerts gemäß dem Stand der Technik. Hierbei ist der Transformator (50) gegenüber der Schaltungsanordnung gemäß Fig. 1 dahingehend weitergebildet, dass er auf der Sekundärseite (4) zwei nicht miteinander verbundene Wicklungen (56, 58) aufweist. Somit ist es möglich durch eine unterschiedliche Windungsanzahl der jeweiligen Wicklungen (56, 58) Spannungen mit unterschiedlichem Absolutwert auf der Sekundärseite (4) zu erzeugen. Nach Gleichrichtung und gegebenenfalls Glättung liegen die Ausgangsgleichspannungen an. Nachteilig hieran ist allerdings, dass für jede der beiden Ausgangsgleichspannungen (102, 104) ein eigener Brückengleichrichter (60) mit jeweils vier Dioden (30) notwendig ist.

Fig. 3 zeigt eine erfindungsgemäße Schaltungsanordnung zur Erzeugung zweier sekundärseitiger Ausgangsgleichspannungen unterschiedlicher Polarität und unterschiedlichen Absolutwerts. Primärseitig ist hier eine Gleichspannungsquelle (40) mit einer Spannung von beispielhaft 15V vorgesehen, die an der Mittelanzapfung (73) eines Transformators (70) mit einer ersten und zweiten Wicklung (72, 74) unterschiedlicher Windungsanzahl, anliegen. Sekundärseitig (4) soll eine erste Ausgangsgleichspannung von 15V und eine zweite Ausgangsgleichspannung von ca. -8V erzeugt werden.

Primärseitig (2) sind hierzu zwei Transistoren (80, 90) vorgesehen, von denen ein erster, ein n-Kanal MOS-FET (80) mit der ersten Wicklung (72) und dem primärseitigen Grundpotential (6) verbunden ist und ein zweiter, ein p-Kanal MOS-FET (90) mit der zweiten Wicklung (74) und dem primärseitigen Grundpotential (6) verbunden ist.

Die erste Wicklung (72) des Transformators (70) zur Leistungsübertragung zu dem ersten sekundärseitigen Ausgang der Schaltungsanordnung weist hier eine Windungsanzahl auf, die gleich ist derjenigen Windungsanzahl der sekundärseitigen dritten Wicklung (76). Im einfachsten Fall wären dies jeweils 15 Windungen, wodurch die 15V der Primärseite (2), ohne Berücksichtigung von Verlusten, auf die Sekundärseite (4) übertragen werden.

Die primärseitige zweite Wicklung (74) des Transformators (70) zur Leistungsübertragung zu dem zweiten sekundärseitigen Ausgang der Schaltungsanordnung weist hier eine Windungsanzahl auf, die größer ist als diejenige Windungsanzahl der sekundärseitigen dritten Wicklung (76). Im einfachsten Fall wären dies 28 Windungen, wodurch die 15V der Primärseite (2), ohne Berücksichtigung von Verlusten, auf der Sekundärseite (4) eine Ausgangsspannung (120) von ca. 8V absolut erzeugt.

Zur Leistungsübertragung werden die beiden primärseitigen Transistoren (80, 90) abwechselnd derart versetzt zueinander und mit einem Tastverhältnis geschaltet, das umgekehrt proportional zur Windungsanzahl der zugeordneten Wicklung (72, 74) des Transformators (70) ist. Bei den genannten Beispielwerten entspricht dies einem Pulslängenverhältnis von 15 zu 28, wodurch die im Transformator (70) gespeicherte Energie vollständig von der Primär- (2) zur Sekundärseite (4) übertragen wird. Eine derartige Ansteuerung kann beispielhaft mittels eines Microcontrollers erfolgen, der hierbei als Taktgenerator verwendet wird und die Schaltimpulse für die beiden primärseitigen Transistoren (80, 90) erzeugt.

Die primärseitige Eingangsspannung kann auch um einen ganzzahligen Faktor oder um einen ganzzahligen Teiler unterschiedlich zur ersten Ausgangsspannung der Sekundärseite (4) gewählt werden. Hierzu muss dann die Windungsanzahl der Wicklungen an diesen Faktor, bzw. an diesen Teiler angepasst werden. Beispielhaft würde eine Eingangsspannung von 7,5V also die Hälfte der oben genannten Eingangsspannung, eine Verdoppelung der Windungszahl auf der Sekundärseite erfordern.

Im Ergebnis ist der sekundärseitige Schaltungsaufwand durch den entsprechenden höheren primärseitigen Aufwand wesentlich geringer als gemäß dem Stand der Technik.

Die sekundärseitige dritte Wicklung (76) des Transformators (70) ist mit einem Anschluss mit dem sekundärseitigen Grundpotential (8) und mit dem anderen Anschluss mit zwei unterschiedlich gepolten Dioden (30) verbunden. Die erste Diode (32) ist mit ihrer Anode mit der dritten Wicklung (4) des Transformators (70) verbunden und bildet mit ihrer Kathode den ersten Gleichspannungsausgang (110) verbunden, wobei hier noch ein gegen sekundärseitiges Grundpotential (8) geschalteter Kondensator (20) zur Spannungsglättung vorgesehen sein kann. Somit liegt hier am ersten Gleichspannungsausgang eine Spannung von +15V an.

Die zweite Diode (34) ist mit ihrer Kathode mit der sekundärseitigen dritten Wicklung (76) des Transformators (70) verbunden und bildet mit ihrer Anode den zweiten Gleichspannungsausgang (120), wobei hier ebenfalls noch ein gegen sekundärseitiges Grundpotential (8) geschalteter Kondensator (20) zur Spannungsglättung vorgesehen sein kann. Somit liegt hier am zweiten Gleichspannungsausgang eine Spannung von ca. -8V an.

Fig. 4 zeigt eine Schaltungsanordnung zur Erzeugung zweier sekundärseitiger Ausgangsgleichspannungen gleicher Polarität und unterschiedlichen Absolutwerts. Hierbei ist der primärseitige Schaltungsteil identisch demjenigen gemäß Fig. 3. Sekundärseitig ist allerdings die Anode der ersten Diode (32) mit einem ersten Anschluss der sekundärseitigen dritten Wicklung (76) des Transformators (70) und die Anode der zweiten Diode (34) mit dem zweiten Anschluss der sekundärseitig dritten Wicklung (76) des Transformators (70) verbunden. Die jeweiligen Anoden sind noch über weitere Dioden (36) mit dem sekundärseitigen Grundpotential (8) verbunden. Weiterhin sind auch hier Glättungskondensatoren (20) vorgesehen. Die Kathoden bilden die jeweiligen Gleichspannungsausgänge mit 15V bzw. 8V.

Der wesentliche Vorteil dieser beiden Schaltungsanordnungen gemäß Fig. 3 und 4 ist, dass durch den schaltungstechnischen Mehraufwand auf der Primärseite (2), der schaltungstechnische Aufwand auf der Sekundärseite (4) wesentlich reduziert werden kann. Mit dieser primärseitigen Schaltung ist es auch möglich eine Mehrzahl von parallel geschalteten Transformatoren (70) mit der getakteten Eingangsspannung zu versorgen, wodurch dieser Schaltungsteil trotz mehrerer möglicher Sekundärseiten (4) nur einmal benötigt wird, während die oben bei Fig. 1 und 2 beschrieben aufwändigen sekundärseitigen Schaltungsteile jeweils pro Sekundärseite (4) einmal vorzusehen sind.

Fig. 5 zeigt verschiedene Spannungsverläufe obiger Schaltungsanordnungen. Fig. 5a zeigt den Absolutwert der Eingangsspannung (10) einer Schaltungsanordnung gemäß Fig. 1 oder 2, wohingegen Fig. 5b eine der beiden betragsmäßig gleichen sekundärseitigen Ausgangsgleichspannungen (100 a/b) gemäß Fig. 1 zeigt. Fig. 5c zeigt die sekundärseitigen Ausgangsgleichspannungen (102, 104) gemäß Fig. 2.

Fig. 5d zeigt den primärseitigen Spannungsverlauf durch die Transistoren (80, 90), wobei "T" hier eine Schaltperiode, also einen Schaltzyklus des ersten und zweiten Transistors (80, 90), darstellt. Hierbei ist eine Schaltfrequenz von mindestens 10 kHz, besser noch von mindestens 100 kHz, vorzusehen. Fig. 5e zeigt die sekundärseitige Ausgangsspannung am Transformator (70). Hierbei ergibt sich durch die erfindungsgemäße Ansteuerung, dass die jeweiligen Energiepakete (702, 704), gekennzeichnet als gestreifte Bereiche, die den beiden Ausgängen zugeführt werden, aufgrund der unterschiedlichen Spannung in Verbindung mit den angepassten Schaltzeiten der primärseitigen Transistoren (80, 90) für beide Ausgangsspannungen (110, 120) gleich sind. Schließlich zeigt Fig. 5f schematisch die geglätteten Ausgangsgleichspannungen einer Schaltungsanordnung gemäß Fig. 3.

## Patentansprüche

1. Schaltungsanordnung zur potentialgetrennten Leistungsübertragung von einer Primär-(2) zu einer Sekundärseite (4) mit zwei sekundärseitigen Ausgangsgleichspannungen, wobei der Absolutwert der ersten Ausgangsgleichspannung (110) höher ist als der Absolutwert der zweiten Ausgangsgleichspannung (120), mit einem Transformator (70) zur Leistungsübertragung, der primärseitig (2) eine erste (72) und eine zweite Wicklung (74) mit gemeinsamer Mittelanzapfung (73) und sekundärseitig (4) eine dritte Wicklung (76) aufweist, hierbei das Verhältnis der Windungsanzahl der ersten (72) und zweite Wicklung (74) angepasst ist dem Verhältnis der beiden sekundärseitigen Ausgangsgleichspannungen (110, 120), die Mittelanzapfung (73) mit einer Gleichspannungsquelle (40) verbunden ist, die erste Wicklung (72) mit einem ersten Transistor (80) und die zweite Wicklung (74) mit einem zweiten Transistor (90) und diese jeweils mit dem zweiten Lastanschluss mit dem primärseitigem Grundpotential (6) verbunden sind, wobei
die Ausgangsspannungen (110, 120) eine unterschiedliche Polarität aufweisen und ein Anschluss der sekundärseitigen dritten Wicklung (76) auf dortigem Grundpotential (8) liegt und der andere Anschluss mit der Anode einer ersten Diode (32) und der Kathode einer zweiten Diode (34) verbunden ist, an deren jeweils anderem Anschluss die jeweilige Ausgangsgleichspannung anliegt,
wobei Schaltungsanordnung derart ausgebildet ist, dass die Transistoren (80, 90) zur Leistungsübertragung versetzt zueinander mit einem Tastverhältnis geschaltet werden, das umgekehrt proportional zur Windungsanzahl der zugeordneten Wicklung (72, 74) des Transformators (70) ist.

2. Schaltungsanordnung nach Anspruch 1, wobei
die Ausgänge der ersten (32) und zweiten Diode (34) jeweils mit einem Kondensator (20) verbunden sind, dessen jeweils zweiter Anschluss auf sekundärseitigem Grundpotential (8) liegt.

3. Schaltungsanordnung nach Anspruch 1, wobei
die Windungsanzahl der ersten Wicklung (72) kleiner ist als diejenige Windungsanzahl der zweiten Wicklung (74) und wobei die Windungsanzahl der dritten Wicklung (76) gleich der Windungsanzahl der ersten Wicklung (72) ist.

4. Schaltungsanordnung nach Anspruch 1, wobei
die Windungsanzahl der ersten Wicklung (72) kleiner ist als diejenige Windungsanzahl der zweiten Wicklung (74) und wobei die Windungsanzahl der dritten Wicklung (76) ein ganzzahliges Vielfaches oder ein ganzzahliger Teil der Windungsanzahl der ersten Wicklung (72) ist.

5. Schaltungsanordnung nach Anspruch 1, wobei
die Mindestfrequenz einer Schaltperiode (T) beider Transistoren (80, 90) größer als 10 kHz ist.

## Claims

1. Circuit arrangement for the potential-isolated power transfer from a primary side (2) to a secondary side (4) with two secondary-side output DC voltages, wherein the absolute value of the first output DC voltage (110) is higher than the absolute value of the second output DC voltage (120), comprising a transformer (70) for power transfer, which has on the primary side (2) a first winding (72) and a second winding (74) with a common centre tap (73) and on the secondary side (4) a third winding (76), in this case the ratio of the number of turns of the first winding (72) and second winding (74) is adapted to the ratio of the two secondary-side output DC voltages (110, 120), the centre tap (73) is connected to a DC voltage source (40), the first winding (72) is connected to a first transistor (80) and the second winding (74) is connected to a second transistor (90) and the said transistors are each connected by way of the second load connection to the primary-side reference potential (6), wherein
the output voltages (110, 120) have a different polarity and one connection of the secondary-side third winding (76) is at reference potential (8) of the said secondary side and the other connection is connected to the anode of a first diode (32) and the cathode of a second diode (34), to the respectively other connection of which the respective output DC voltage is applied,
wherein the circuit arrangement is designed in such a way that the transistors (80, 90) for power transfer are switched in a manner offset with respect to one another with a duty ratio that is inversely proportional to the number of turns of the assigned winding (72, 74) of the transformer (70).

2. Circuit arrangement according to Claim 1, wherein the outputs of the first diode (32) and second diode (34) are respectively connected to a capacitor (20), the respective second connection of which is at the secondary-side reference potential (8).

3. Circuit arrangement according to Claim 1, wherein the number of turns of the first winding (72) is less than that number of turns of the second winding (74), and wherein the number of turns of the third winding (76) is equal to the number of turns of the first winding (72).

4. Circuit arrangement according to Claim 1, wherein the number of turns of the first winding (72) is less than that number of turns of the second winding (74), and wherein the number of turns of the third winding (76) is an integral multiple or an integral portion of the number of turns of the first winding (72).

5. Circuit arrangement according to Claim 1, wherein the minimum frequency of a switching period (T) of both transistors (80, 90) is greater than 10 kHz.

## Revendications

1. Circuit destiné à la transmission de puissance à potentiel isolé d'un côté primaire (2) à un côté secondaire (4) comportant deux tensions de sortie continues du côté secondaire, la valeur absolue de la première tension de sortie continue (110) étant supérieure à la valeur absolue de la deuxième tension de sortie continue (120), un transformateur (70) destiné à la transmission de puissance, lequel comporte du côté primaire (2) un premier enroulement (72) et un deuxième enroulement (74) à prise centrale commune (73) et du côté secondaire (4) un troisième enroulement (76), le rapport du nombre de tours du premier enroulement (72) à celui du deuxième enroulement (74) étant ici adapté au rapport entre les deux tensions de sortie continues côté secondaire (110, 120), la prise centrale (73) étant reliée à une source de tension continue (40), le premier enroulement (72) étant relié à un premier transistor (80) et le deuxième enroulement (74) étant relié à un deuxième transistor (90) et ces transistors étant reliés chacun par la deuxième borne de charge au potentiel de terre côté primaire (6),
les tensions de sortie (110, 120) ayant des polarités différentes et une borne du troisième enroulement côté secondaire (76) étant portée au potentiel de masse (8) et l'autre borne étant reliée à l'anode d'une première diode (32) et à la cathode d'une deuxième diode (34), la tension de sortie continue respective étant appliquée à chacune des autres bornes de ces diodes,
le circuit étant conçu de telle sorte que les transistors (80, 90) destinés à la transmission de puissance soient montés de manière décalée entre eux avec un rapport cyclique qui est inversement proportionnel au nombre de tours de l'enroulement associé (72, 74) du transformateur (70) .

2. Circuit selon la revendication 1,
les sorties de la première diode (32) et de la deuxième diode (34) sont reliées chacune à un condensateur (20) dont la deuxième borne respective est portée au potentiel de masse côté secondaire (8).

3. Circuit selon la revendication 1,
le nombre de tours du premier enroulement (72) étant inférieur au nombre de tours du deuxième enroulement (74), et le nombre de tours du troisième enroulement (76) étant égal au nombre de tours du premier enroulement (72) .

4. Circuit selon la revendication 1,
le nombre de tours du premier enroulement (72) étant inférieur au nombre de tours du deuxième enroulement (74) et le nombre de tours du troisième enroulement (76) étant un multiple entier ou une partie entière du nombre de tours du premier enroulement (72).

5. Circuit selon la revendication 1,
la fréquence minimale d'une période de commutation (T) des deux transistors (80, 90) étant supérieure à 10 kHz.
